(19) **Europäisches Patentamt**

**European Patent Office**

**Office européen des brevets**

(11) **EP 1 152 406 A2**

(12) **EUROPEAN PATENT APPLICATION**

(43) Date of publication:
 **07.11.2001 Bulletin 2001/45**

(51) Int Cl.[7]: **G11B 7/24**

(21) Application number: **01109918.1**

(22) Date of filing: **24.04.2001**

(84) Designated Contracting States:
 **AT BE CH CY DE DK ES FI FR GB GR IE IT LI LU
 MC NL PT SE TR**
 Designated Extension States:
 **AL LT LV MK RO SI**

(30) Priority: **24.04.2000 JP 2000123133**

(71) Applicant: **SONY CORPORATION
 Tokyo (JP)**

(72) Inventors:
 • **Yukumoto, Tomomi, Sony Corporation
  Tokyo (JP)**
 • **Yamasaki, Takeshi, Sony Corporation
  Tokyo (JP)**
 • **Kashiwagi, Toshiyuki, Sony Corporation
  Tokyo (JP)**

(74) Representative: **MÜLLER & HOFFMANN
 Patentanwälte
 Innere Wiener Strasse 17
 81667 München (DE)**

(54) **Optical recording medium**

(57) To suppress an occurrence of corrosion in a recording layer composing an optical recording medium (10) and avoiding separation of a light transmission layer (3), a signal region constituted of pits and/or grooves, a recording layer (2) and a light transmission layer are formed on a non-magnetic supporting substrate (1). The recording layer is formed on the entire signal region and it is not formed in other region than the signal region in an outermost peripheral portion (1a) and an innermost peripheral portion (1b) of the non-magnetic substrate.

# F I G. 1

10

EP 1 152 406 A2

**Description**

BACKGROUND OF THE INVENTION

Field of the Invention

The present invention relates to an optical recording medium.

Description of the Related Art

Recently, digitization of broadcasting has been accelerated, so that digital high definition (HD) broadcasting is scheduled. It has been generally said that a recording capacity necessary for digital high definition is 11 GB for an hour.

As a current optical recording medium of compact disc size (hereinafter referred to as CD) having a recording layer of a single-layer structure, a format having a recording capacity of 3.0-5.2 [GB] has been proposed and realized for actual use.

Optical recording media having basically common optical parameters, or, the same system as those of DVD-ROM (Digital Varsatile Disc-Read Only Memory) but different format depending on groove structure and recording material have been known, for example, GIGA-station, NEC: DVD-R/W, Pioneer: DVD+R/W, Philips: DVD-RAM, PANASONIC and the like.

However, under the condition of recording capacity of 3.0-5.2 [GB], there has been a problem that picture quality decreases as compared to the current VHS if it is intended to record pictures for two hours at standard picture quality (SD: Standard Definition). Thus, actually, the recording time is restricted to about an hour even to realize the standard picture quality.

The recording capacity provided by the conventional technology cannot satisfy requirements for achieving the digital HD (high definition) broadcasting.

To increase the recording capacity of the optical recording medium on the basis of these actual condition, it is effective to reduce the spot size of recording laser to increase the recording speed.

More specifically, to reduce the spot size of the recording laser, methods for reducing wavelength $\lambda$ of laser beam and method for increasing a numerical aperture N.A. of an objective lens to concentrate the laser beam to the optical recording medium have been proposed.

Particularly, by employing both the method for reducing the wavelength $\lambda$ of the laser beam and the method of increasing a numerical aperture N.A. of the objective lens, the spot size of the laser beam can be made smaller than when either of them is employed individually.

For example, by using a blue-violet laser beam of near $\lambda$ = 405 [nm] band in wavelength and employing an objective lens having a numerical aperture of N.A. = 0.85, it is theoretically, possible to achieve higher density recording.

To raise the recording density in this way, it is necessary to decrease the value of ($\lambda$/N.A.).

As described above, by using a blue-violet laser beam of near $\lambda$ = 405 [nm] band in wavelength and employing an objective lens having a numerical aperture of N.A. = 0.85, a large recording capacity of $(0.65/0.405) \times (0.85/0.60)^2$ = 5.17 [times] can be achieved as compared to a format having conventional DVD optical parameters, $\lambda$ = 0.65 [μm] in wavelength and numerical aperture N.A. = 0.60.

Therefore, following the above described format, a recording capacity of 15.5-26.9 [GB] can be achieved as compared to 3.0-5.2 [GB].

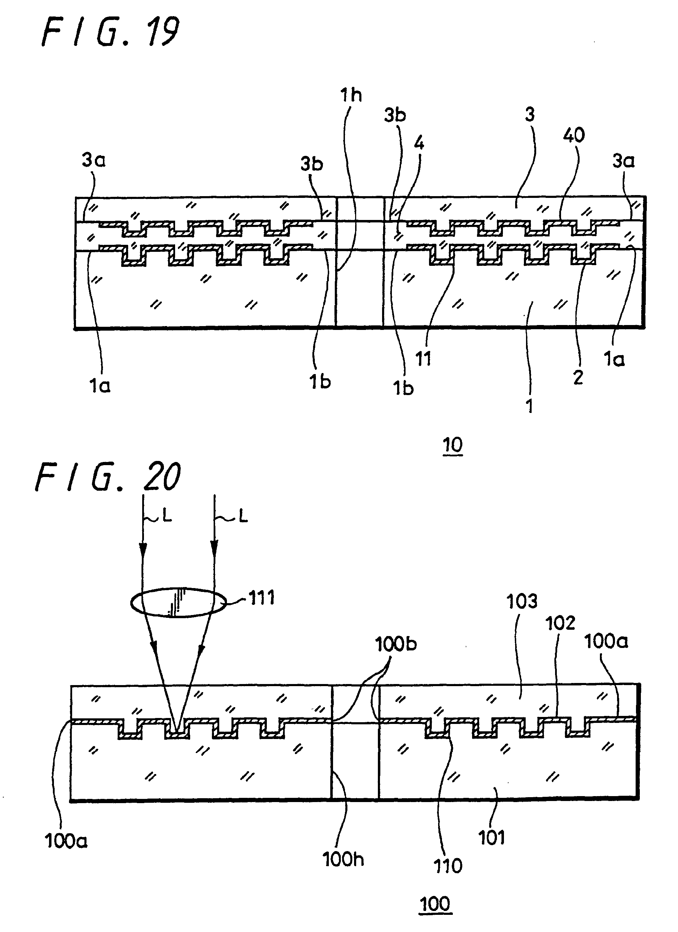

FIG. 20 shows a schematic structure diagram of an example of a conventional optical recording medium 100.

Considering a currently available optical recording medium which can apply to red laser beam to blue laser beam, the thickness of the light transmission layer 103 formed in the surface on the side to be irradiated with the laser beam is preferably 3-177 [μm].

The optical recording medium 100 shown in FIG. 20 includes a non-magnetic supporting substrate 101 made of for example, glass, polycarbonate resin, polyolefine resin or the like having fine unevenness 110 such as predetermined pits and/or groove formed in the surface. On the substrate 101, a recording layer 102 is formed, corresponding to various optical recording mediums, such as that a metal reflection layer made of, for example, Al, Ag or the like, a dielectric layer made of, for example, $Si_3N_4$ or the like, and a recording material layer made of magnetic substance such as TbFeCo, GdFeCo. A light transmission layer 103 made of, for example, ultraviolet curing resin is formed on the recording layer 102.

If recording or reproduction of information is to be executed on or from the optical recording medium 100 shown in FIG. 20, a predetermined laser beam L is converged with an objective lens 111 and irradiated on a main surface opposite to the side of the non-magnetic supporting substrate 101 or in FIG. 20 on the side of a face in which the light transmission layer 103 is formed.

SUMMARY OF THE INVENTION

In the format having the DVD parameters, the light transmission layer 103 which covers the signal region face or signal recorded region is set to about 0.6 mm and thus, if a high numerical aperture N.A. (=0.85) is employed for improvement of the recording density, spherical aberration and coma aberration become problem.

The spherical aberration has a correlation with the thickness of the light transmission layer 103. If the thickness is shifted by $\Delta t$ with respect to a set value of the thickness of the light transmission layer 103, the spherical aberration increases proportional to the fourth power of numerical aperture N.A.. Therefore, if the numerical aperture N.A. of the objective lens is 0.85 assuming that the thickness deviation of the light transmission layer 103 of the DVD is $\pm 30$ [$\mu$m], the spherical aberration has to be limited to $\pm 7.4$ [$\mu$m] for the reason of the [expression 1] described below.

[Expression 1]

$$\pm 30 \text{ x } (0.60/0.85)^4 = \pm 7.4 \text{ [} \mu \text{ m]}$$

On the other hand, the coma aberration is proportional to the third power of the numerical aperture N. A.. Therefore, it has to be limited to $\pm 0.14°$ with respect to the skew standard of the DVD of 0.4° for the reason of [Expression 2] described below.

[Expression 2]

$$\pm 0.4 \text{ x } (0.60/0.85) = \pm 0.14°$$

Further, because these aberrations are inversely proportional to the wavelength, if the wavelength of an applied laser beam is for example, $\lambda = 405$ [nm], the deviation of thickness has to be limited to $\pm 4.6$ [$\mu$m] for the reason of [Expression 3] described below.

[Expression 3]

$$\pm 7.4 \text{ [} \mu \text{m] x } (0.405/0.650) = \pm 4.6 \text{ [} \mu \text{m]}$$

Further, the coma aberration has to be limited to $\pm 0.087°$ for the reason of [Expression 4] described below.

[Expression 4]

$$\pm 0.14° \text{ x } (0.405/0.650) = \pm 0.087°$$

On the other hand, the coma aberration can be corrected by reducing the thickness of the light transmission layer 103. For example, by reducing the thickness of the light transmission layer 103 from 0.6 [mm] to 0.1 [mm], sixfold skew margin can be obtained.
That is, it is permitted to be $\pm 0.522°$ for the reason of [Expression 5] described below.

[Expression 5]

$$\pm 0.087° \text{ x } 6 = \pm 0.522°$$

However, the deviation of the thickness of the light transmission layer 103 has to be limited to $\pm 4.6$ [$\mu$m] as described above. Particularly, in the optical recording medium capable of both recording and reproducing, a predetermined accuracy is required for both of recording and reproduction. Thus, the deviation of the thickness has to be distributed to these and as a conclusion, the deviation of the thickness has to be limited to $\pm 2.3$ [$\mu$m] which is half of the above described value.
In a recording/reproduction system with short wave laser and high numerical aperture N.A., recording and reproduction in the future HD (High Definition) is realized by achieving a light transmission layer of 100 $\mu$m in thickness with the deviation of the thickness of $\pm 2.3$ [$\mu$m].
Because, as described above, the signal pits or groove in the recording layer 102 is fine and the thickness of the light transmission layer 103 is very small in the optical recording medium for high density recording, particularly, it is necessary to improve corrosion resistance of the recording layer 102.
That is, in case of the optical recording medium for high density recording, the recording layer 102 is close to the air in an outermost peripheral portion 100a and an innermost portion 100b of the optical recording medium 100 of FIG. 20. Therefore, corrosion is likely to occur from this portion. For example, if recorded information is reproduced from the optical recording medium 100, this corrosion may induce reproduction failure, so that reliability of the optical recording medium 100 may be badly affected.
In the optical recording medium shown in FIG. 20, because the recording layer 102 composed of various materials exists between the light transmission layer 103 and the non-magnetic supporting substrate 101 in the outermost peripheral portion 100a and the innermost portion 100b, there is generated a problem that separation occurs from this portion as the thickness of the light transmission layer 103 decreases.
Accordingly, as a result of accumulated researches by present inventors, there is provided an optical recording medium having a high reliability in which a recording beam or a reproduction beam is irradiated from the side of the light transmission layer, an occurrence of corrosion in the recording layer composing a large-capacity optical recording medium being avoided and separation of the light transmission layer in the outermost peripheral portion 100a and innermost portion 100b of the disc being suppressed.
The present invention provides optical recording medium characterized in that a signal region constituted of information pits and/or groove are formed on a main surface of a disc-shaped non-magnetic supporting substrate and a recording layer and a reflection layer and a light transmission layer of 3-177 [μm] in thickness are formed in the signal region, so that information reproduction and/or recording is carried out by irradiating the side of the light transmission layer with laser beam, the recording layer or the reflection layer being formed in the entire signal region but not formed in other region than the signal region in an outermost peripheral portion and an innermost portion of the disc-shaped non-magnetic substrate.

Because in the optical recording medium of the present invention, the substrate and the light transmission protective layer are made in direct contact with each other in the outermost peripheral portion and the innermost portion, adhesiveness is improved, so that the disc hardness can be improved.

Further, an occurrence of corrosion in the recording film in the innermost portion and the outermost peripheral portion can be avoided.

BRIEF DESCRIPTION OF THE DRAWINGS

FIG. 1 shows a schematic sectional diagram of an example of the optical recording medium of the present invention;
FIG. 2 shows a production process diagram for an example of the optical recording medium of the present invention;
FIG. 3 shows a production process diagram for an example of the optical recording medium of the present invention;
FIG. 4 shows a production process diagram for an example of the optical recording medium of the present invention;
FIG. 5 shows a production process diagram for an example of the optical recording medium of the present invention;
FIG. 6 shows a production process diagram for an example of the optical recording medium of the present invention;
FIG. 7 shows a production process diagram for an example of the optical recording medium of the present invention;
FIG. 8 shows a production process diagram for an example of the optical recording medium of the present invention;
FIG. 9 shows a production process diagram for an example of the optical recording medium of the present invention;
FIG. 10 shows a production process diagram for an example of the optical recording medium of the present invention;
FIG. 11 shows a production process diagram for an example of the optical recording medium of the present invention;
FIG. 12 shows a production process diagram for an example of the optical recording medium of the present invention;
FIG. 13 shows a production process diagram for an example of the optical recording medium of the present invention;
FIG. 14 shows a production process diagram for an example of the optical recording medium of the present invention;
FIG. 15 shows a relation between the error rate and a distance from the center of a disc in the optical recording medium of the present invention;
FIG. 16 shows a relation between the error rate and a distance from the center of a disc in a conventional optical recording medium;
FIG. 17 shows a schematic sectional diagram of other example of the optical recording medium of the present invention;
FIG. 18 shows a schematic sectional diagram of other example of the optical recording medium of the present invention;
FIG. 19 shows a schematic sectional diagram of other example of the optical recording medium of the present invention;
FIG. 20 shows a schematic sectional diagram of other example of the conventional optical recording medium;

DESCRIPTION OF THE PREFERRED EMBODIMENTS

The optical recording medium of the present invention is comprised a signal region composed of information pits and/or groove, a recording layer and/or a reflection layer formed by coating this signal region with material corresponding to the kind of a target recording medium and a light transmission layer of 3-177 [μm] in thickness made of ultraviolet-curing resin, these layers being formed on a major surface of a non-magnetic supporting substrate made of for example, polycarbonate. By irradiating the side of the light transmission layer with laser beam, reproduction and/or recording of information are carried out. The recording layer or the reflection layer is formed on an entire signal region on the non-magnetic supporting substrate. No film is formed on region other than the signal region on a outermost peripheral portion and a innermost portion of the disc shaped non-magnetic substrate. In the outermost peripheral portion and innermost portion, no recording layer or reflection layer exits between the light transmission layer and the nonmagnetic supporting substrate.

Hereinafter, the embodiments of the optical recording medium of the present invention will be described by picking up examples. The optical recording medium of the present invention is not restricted to the examples described below.

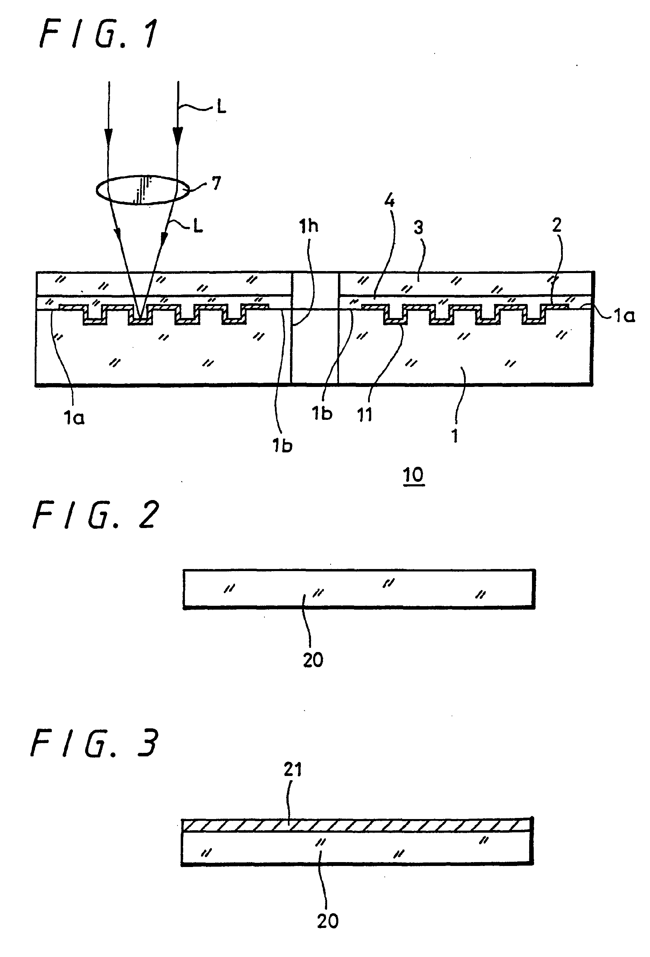

FIG. 1 shows a schematic sectional view of an example of the optical recording medium 10 of the present invention.

The optical recording medium 10 shown in FIG. 1 is comprised of a non-magnetic supporting substrate 1 formed of for example, polycarbonate resin, polyolefine resin or the like having fine unevenness such as predetermined pits, grooves or the like, and recording layer 2 composed of metal layer made of Al, dielectric material layer made of $ZnS-SiO_2$, optical recording layer made of GeSbTe and dielectric material layer made of $ZnS-SiO_2$ formed successively. Then, a light transmission layer 3 is formed on this recording layer 2 via for example, adhesive agent layer 4 of ultraviolet-curing resin.

If the groove is formed in the non-magnetic supporting substrate 1, laser beam can be moved to any place on the disc by using the groove as a guide groove. The pits acts as information signal so that recorded information is read out by irradiating the pits with laser beam.

Such fine unevennesses are formed spirally or coaxially in a predetermined configuration on the non-magnetic supporting substrate 1.

When reproducing information or recording information is carried out with respect to the optical recording medium 10 shown in FIG. 1, a predetermined laser beam L is projected and focused to the main surface on an opposite side to the non-magnetic supporting substrate 1, namely from the side in which the light transmission layer 3 is formed in FIG. 1.

As the material for composing the non-magnetic supporting substrate 1, polycarbonate resin, polyolefine resin, acrylic resin, other resin and glass can be employed.

The non-magnetic supporting substrate 1 can be produced by injection molding method (injection method) or photo polymerization method (2P method).

Because in the optical recording medium 10 of the present invention, laser beam L is projected from the main surface on the side of the light transmission layer 3, the non-magnetic supporting substrate 1 may be formed of untransparent material such as metal as well as transparent material with respect to laser beam L.

The light transmission layer 3 is preferably formed of material having a capacity of absorbing a predetermined wavelength of laser beam for recording and reproduction. More specifically, material having transmissivity of more than 90% with respect to laser beam is preferred.

In the optical recording medium 10 of the present invention, the thickness of the light transmission layer 3 is set to 3-177 [μm] to achieve a large capacity. By combining it with an objective lens having a high numerical aperture N.A (for example, N.A. = 0.85), a high density recording capacity optical recording medium is achieved.

The light transmission layer 3 can be formed by bonding thermoplastic resin film having a uniform thickness onto the non-magnetic supporting substrate 1. Further, the light transmission layer 3 may be formed also by interposing ultraviolet curing resin between the thermoplastic resin film and the non-magnetic supporting substrate 1, bonding these components and leaving cured by ultraviolet ray.

This light transmission layer 3 may be also formed by bonding a thermoplastic resin film having adhesiveness onto the non-magnetic supporting substrate 1. Further, the light transmission layer 3 may be also formed by spin-coating the top face of the non-magnetic supporting substrate 1 with ultraviolet curing resin and then bonding the thermoplastic resin film on this layer. If the film is bonded by way of the ultraviolet curing resin, the thickness of the light transmission layer 3 is a sum of the thickness of the thermoplastic resin film and that of the ultraviolet curing resin after cured, and in the optical recording medium according to the present invention, this is 3-177 [μm].

As material of the thermoplastic resin film, for example, polycarbonate resin or polyolefine may be used.

Polycarbonate resin may be produced according to so-called phosgene method by reacting, for example, diphenol base material such as bisphenol A with phosgene under an existence of acid binder such as sodium hydrate.

In addition to ordinary polycarbonate resin, branched polycarbonate having phenol base hydroxyl group may be used as a branching agent and long-chain alkyl acid chloride or long-chain alkyl ester substituted phenol or the like may be used as an end stop agent. End long-chain alkyl branched polycarbonate resin for use as both the branching agent and end stop agent or a mixture of these materials may be used.

Then, the aforementioned thermoplastic resin is loaded onto a conventionally used extruder and melted by means of a heater. Then, it is extruded in the form of a sheet, and is formed to resin sheet by using a plurality of cooling rolls.

If the optical recording medium 10 of the present invention is produced as a phase change type optical recording medium, a phase change material is used for material layer composing the recording layer 2.

The phase change material is material which generates reversible condition change when laser beam is irradiated. Particularly, material which generates reversible phase change between amorphous state and crystalline state is preferable and conventionally well known material such as chalcogen compound and single-element chalcogen may be used.

For example, systems containing Te, Se, Ge-Sb-Te, Ge-Te, Sb-Te, In-Sb-Te, Ag-In-Sb-Te, Au-In-Sb-Te, Ge-Sb-Te-Pb, Ge-Sb-Te-Se, In-Sn-Se, Bi-Te, Bi-Se, Sb-Se, Ge-Sb-Te-Bi, Ge-Sb-Te-Co, Ge-Sb-Te-Au or these systems further containing gas additive such as nitrogen, oxygen may be mentioned. Of these materials, material containing mainly Sb-Te system is particularly preferable. It is possible to add any element, for example, Se, Pd or In to this material as an applicable material.

The optical recording medium of the present invention can be applied to a magneto-optical recording medium as well as the phase change type optical recording medium.

In this case, as the recording layer 2 of FIG. 1, a layer of magneto-optical material is formed. For example, conventionally well known magneto-optical recording material such as Tb-Fe system, Tb-Fe-Co system, Gd-Fe system and Gd-Fe-Co system can be applied.

If the optical recording medium 10 of the present invention is formed in the form of ROM (Read Only Disc) type optical disc, as material layer composing the recording layer 2, a reflection layer is formed by employing well known metal material such as Al, Ag.

Next, production process for the optical recording medium 10 of the present invention will be described.

First, a glass substrate 10 whose surface is polished sufficiently is prepared as shown in FIG. 2. This glass substrate 10 is placed on a rotating base (not shown) and then, by rotating this at a predetermined rotation speed, photo-resist 21 is applied in an equal thickness as shown in FIG. 3.

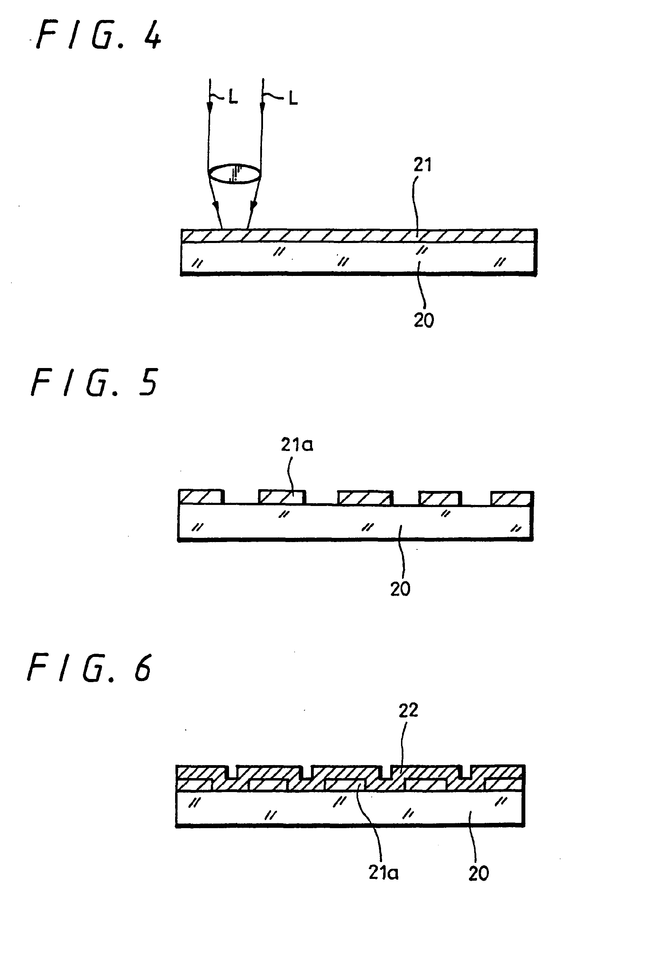

Next, as shown in FIG. 4, the photo-resist 21 is exposed to a predetermined pattern by recording laser beam L. Upon this exposure, while rotating the glass substrate 20, the recording laser beam L is fed by an equal distance for each turn in the radial direction of the glass substrate 20, so that groove latent image is generated at a predetermined interval, for example, spirally in the photo-resist 21.

Because an object of the present invention is to obtain an optical recording medium capable of achieving a high density recording corresponding to a large capacity of 22 [GB], it is necessary to form a high-density guide groove and address in the aforementioned exposure process. Then, with cutting pitch set to about 0.6 [µ m], exposure was carried out. Because the recording layer and material layer produced in post process are buried in a groove formed by this cutting process, the exposure region needs to be formed relatively wider.

For example, more specifically, a groove of 0.37±0.01 [µm] may be formed.

In an optical recording medium of 120 [mm] in diameter (radius 60 [mm]), for example, its signal region is a region of 24-58 [mm] in radius. If the recording is carried out at linear density of 0.13 [µm/bit] with the aforementioned pitch, assuming that signal effectiveness is 80%, finally, an optical recording medium having a large capacity of 22 [GB] can be obtained.

Next, as shown in FIG. 5, the glass substrate 20 is developed with alkali developing solution to remove an exposed portion. Consequently, fine unevenness 21a of a predetermined pattern is formed on the glass substrate 20.

Next, as shown in FIG. 6, surface conductive processing is carried out by electroless plating so as to form electroless plating layer 22 of NiP having a thickness of about 100 nm on the fine unevenness 21a.

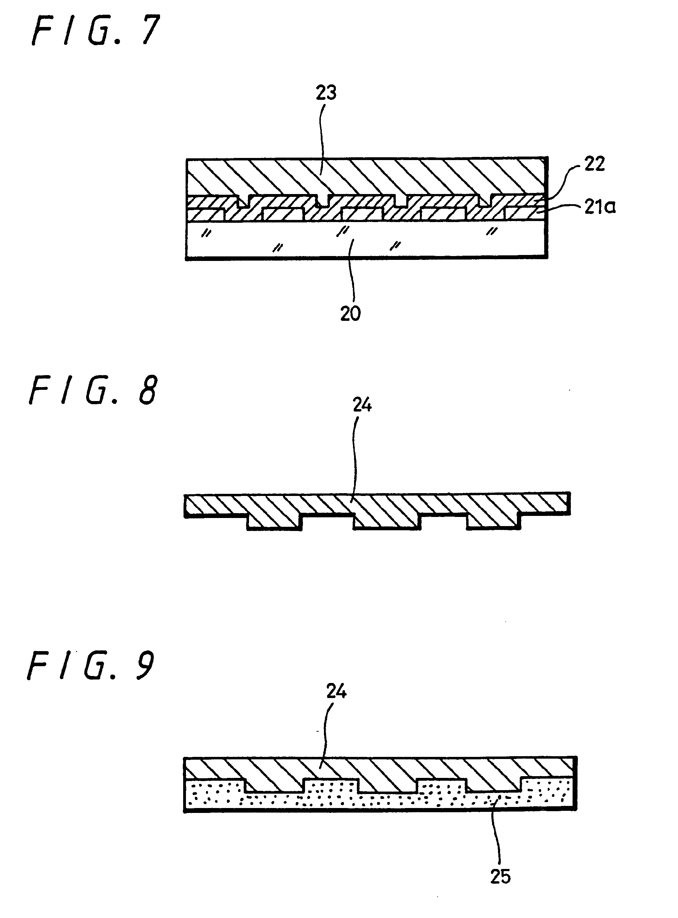

As shown in FIG. 7, by carrying out electrocast plating or electro-plating, metallic plating layer 23 is formed on the electroless plating layer 22 in thickness of, for example, 0.3mm.

Next, the electroless plating layer 22 and the metallic plating layer 23 are removed from the glass substrate 20 so as to produce a metal master disc 24 shown in FIG. 8.

Next, this metal master disc 24 is subjected to heat treatment at high temperatures. This heat treatment is carried out at a temperature over 200°C, for example, in the air of normal pressure for about 30 minutes. Although this heat treatment may be carried out with natural convection type high-temperature drier, not only heating with far-infrared radiation and heating with a hot plate but also other various heating methods may be employed.

Impurity adhering to the surface of the metal master disc 24 can be removed by this heat treatment so that releasability thereof can be improved.

Further, the surface is purified by irradiating the surface of the metal master disc 24 with far-infrared ray and by carrying out plasma irradiation, the releasability is improved.

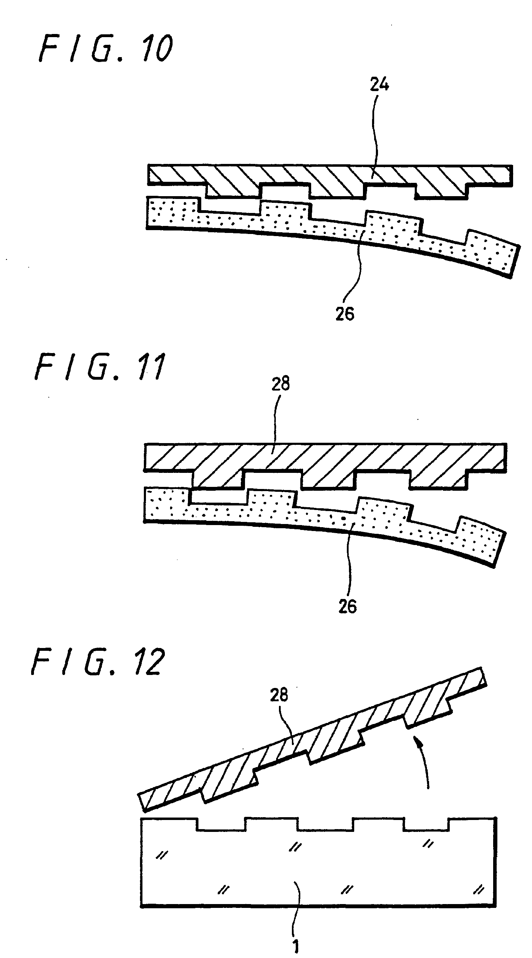

Next, as shown in FIG. 9, the metal master disc 24 is subjected to electro-plating so as to form metal plating layer 25. Then, the metal plating layer 25 is separated from the metal master disc 24 as shown in FIG. 10 so as to produce a stamper duplication disc 26.

Subsequently, for example, plating layer of Ni metal is formed on this stamper duplication disc 26 and separated as shown in FIG. 11, so that a stamper 28 for transferring information signal to an optical disc substrate is obtained.

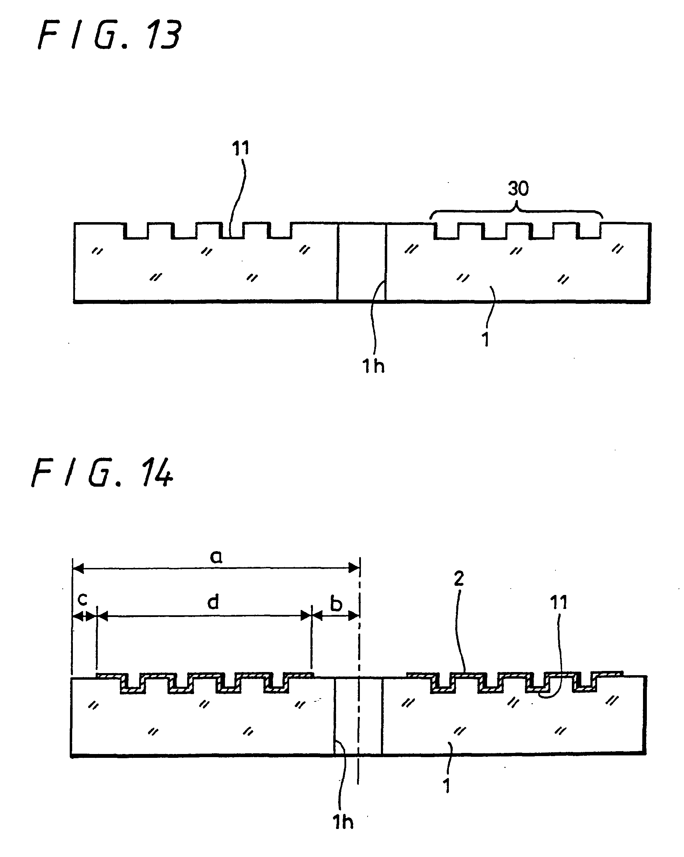

By using the stamper 28 produced in the above manner, as shown in FIG. 12, fine unevenness of a predetermined pattern is transferred by, for example, injection molding, so that non-magnetic supporting substrate 1 shown in FIG. 13 is produced.

Meanwhile, a region to which fine unevenness of the non-magnetic supporting substrate 1 is transferred serves for a signal region 30.

Next, the recording layer 2 is formed on this non-magnetic supporting substrate 1.

This recording layer 2 is formed of material corresponding to various optical recording medium such as, for example, ROM type disc, phase change type optical disc and the like.

For example, metal layer of Al, dielectric layer made of $ZnS\text{-}SiO_2$, optical recording layer of GeSbTe and dielectric layer of $ZnS\text{-}SiO_2$ are formed on the non-magnetic supporting substrate 1 in this order so as to form the recording layer 2.

In the optical recording medium of the present invention, the recording layer 2 is not formed an entire region of the surface of the non-magnetic supporting substrate 1. Although the recording layer 2 is formed on an entire surface of the signal region 30 shown in FIG. 13, it is not formed in a region other than the signal region on the outermost peripheral portion and innermost peripheral portion of the disc.

That is, as shown in FIG. 14, in case of a disc whose radius "a" is 60 [mm], the recording layer 2 is not formed in a region far by b [mm] from the center, for example, 22 [mm] and in a region far by c [mm] from the outer end of the disc, for example, 1.5 [mm].

That is, in case of the disc whose radius a = 60 [mm], in the example described above, the recording layer 2 is formed in a region d [mm] from 22 [mm] from the center up to 58.5 [mm].

Next, as shown in FIG. 1, ultraviolet curing resin is coated in a region, for example, within the distance of 20-60 [mm] from the center of the non-magnetic supporting substrate 1 on which the recording layer 2 is formed, in thickness of for example, 30 [μ m] so as to produce adhesive agent layer 4. After that, a transparent thermoplastic resin film of, for example, 119.5 [mm] in diameter, and 70 [μm] in thickness is bonded by pressing and cured by irradiating with ultraviolet ray.

Consequently, the light transmission layer 3 of, 100 [μm] in thickness with a deviation of ±2 [μm] can be formed, so that the optical recording medium 10 of the present invention can be produced.

As described above, in the optical recording medium 10 of the present invention, the non-magnetic supporting substrate 1 and the light transmission layer 3 are placed in contact with each other by means of the adhesive agent layer 4 in the outermost peripheral portion 1a and innermost portion 1b of the non-magnetic supporting substrate 1, so that no material layer for forming the recording layer 2 exists there. Thus, adhesiveness in this portion is improved so that separation of the light transmission layer 4 can be avoided effectively thereby the strength of the disc hardness being improved.

Further, because the recording layer 2 is not formed in region other than the signal region in the outermost peripheral portion 1a and innermost portion of the non-magnetic supporting substrate 1, the material of the recording layer 2 can be prevented from making contact with the air at an end of the disc, thereby corrosion of the recording layer 2 through this portion being avoided effectively. As a result, an optical recording medium having excellent corrosion resistance and optical performance can be obtained.

Next, by measuring error rates before and after storage under a predetermined condition by using an optical recording medium having the conventionally well known structure shown in FIG. 20 and the optical recording medium 10 of the present invention shown in FIG. 1, the degree of corrosion of the recording layers 102, 2 of these optical recording mediums were inspected.

The storage condition is 80°C, 80% in humidity for 1000 hours.

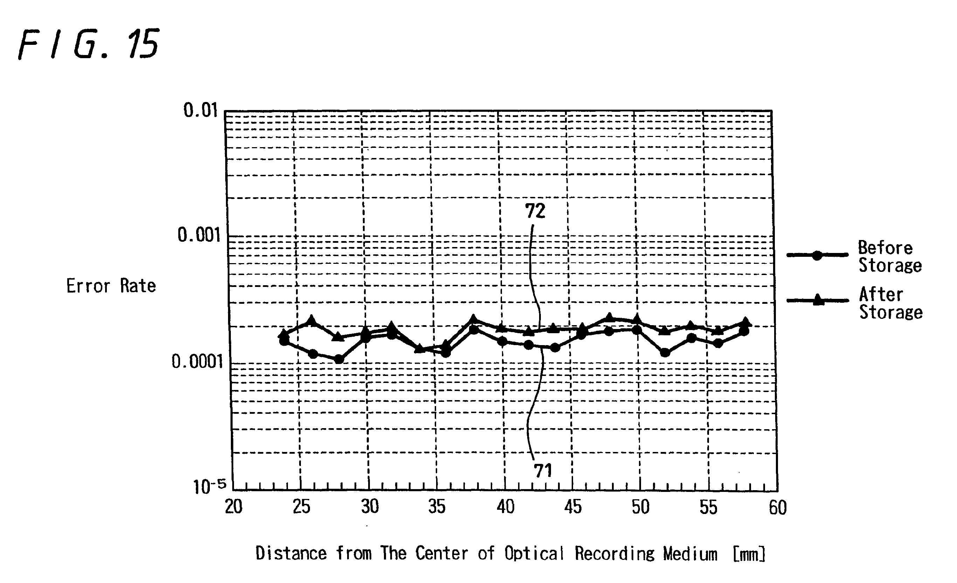

FIG. 15 shows a measurement result of the error rate in the optical recording medium 10 of the present invention shown in FIG. 1. The axis of ordinate indicates the error rate and the abscissa axis indicates a distance from the center of the optical recording medium 10.

In FIG. 15, a line 71 indicates the condition of the error rate before storage under the above described condition and a line 72 indicates the condition of the error rate after the storage under the above described condition.

As shown in FIG. 15, it can be seen that in the optical recording medium 10 of the present invention, an increase of the error rate is very small at every position of that optical recording medium indicating that corrosion of the recording layer 2 has been advanced little.

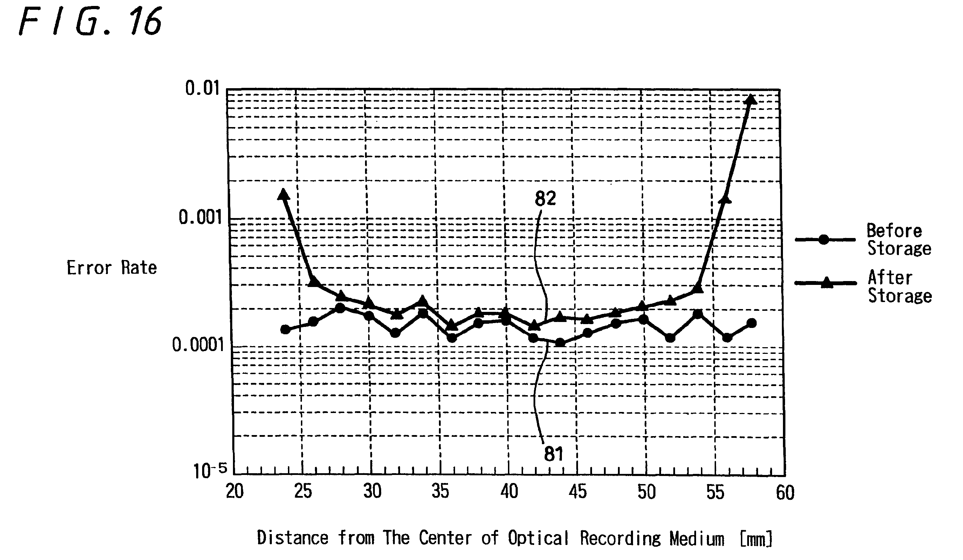

On the other hand, FIG. 16 shows a measurement result of the error rate in the optical recording medium 100 having the conventional structure shown in FIG. 20. In this case, the axis of ordinate indicates the error rate and the abscissa axis indicates a distance from the center of the optical recording medium 100.

In FIG. 16, a line 81 indicates the condition of the error rate before the storage under the above described condition and a line 82 indicates the condition of the error rate after the storage under the above described condition.

As shown in FIG. 16, it is evident that in the conventional optical recording medium 100, the increase of the error rate is large after the storage under the above described condition, particularly near the center of the disc, that is, in the innermost portion and at the end of the disc, that is, in the outermost peripheral portion, indicating that corrosion of the recording layer 102 has been advanced remarkably.

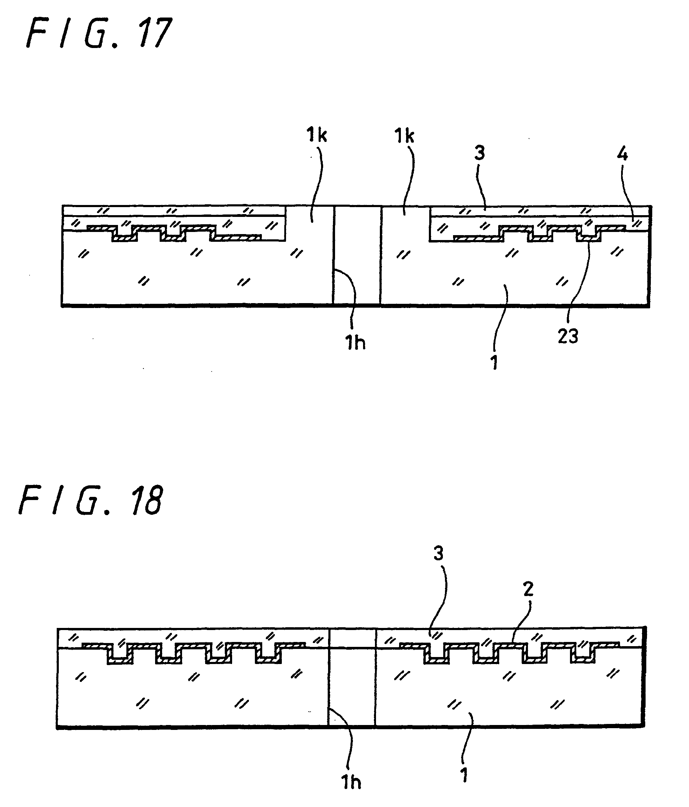

In the optical recording medium of the present invention, as shown in FIG. 17, a portion around a center hole 1h in the non-magnetic supporting substrate 1 is protruded so that this portion is formed thicker than the surrounding portion.

By forming the portion around the center hole 1h thicker, corrosion of the recording layer 2 from the center hole 1h can be avoided effectively, so that separation of the light transmission layer 3 near the center hole can be avoided thereby the strength of the disc being improved.

Further, in the optical recording medium of the present invention, by spin-coating the recording layer 2 with ultraviolet curing resin as shown in FIG. 18 and curing it with by ultraviolet irradiation, the light transmission layer 3, for example 100μm thick can be formed.

Further, according to the present invention, as shown in FIG. 19, it is possible to form fine unevenness such as pits and grooves preliminarily in the surface of thermoplastic resin film which forms the light transmission layer 3, to form a recording layer 40 by applying a predetermined material layer and then to bond this onto the recording layer 2 through the adhesive agent layer 4 so as to produce an optical recording medium having multiple recording layers.

In this case, although the recording layer 40 formed on the side of bonding with the non-magnetic supporting substrate 1 of the light transmission layer 3 is formed on an entire signal region on the surface of the light transmission layer 3, this is not formed on other region than the signal region in the outermost peripheral portion 3a and innermost peripheral portion 3b of the optical recording medium.

Consequently, occurrence of corrosion can be avoided both in the recording layer 2 and the recording layer 40 effectively.

Meanwhile, to form pits or grooves in a thermoplastic resin sheet preliminarily, a conventionally well known method, that is, injection molding method or photo-polymerization method may be applied.

In the optical recording medium 10 of the present invention, the material layer for forming the recording layer 2 (reflection layer) does not exist on a border between the non-magnetic supporting substrate 1 and the light transmission layer 3 in the outermost peripheral portion 1a and the innermost peripheral portion 1b of the non-magnetic supporting substrate 1. Consequently, adhesiveness between the non-magnetic supporting substrate 1 and the light transmission layer 3 in this portion is improved so that separation of the light transmission layer 4 can be avoided effectively, thereby leading to improvement of the strength and durability of the optical disc.

Further, because the recording layer 2 is not formed in region other than the signal region in the outermost peripheral portion 1a and the innermost portion 1b of the non-magnetic supporting substrate 1, contact of the material for composing the recording layer 2 with the air at an end portion of the disc can be avoided, so that an occurrence of corrosion of the recording layer 2 from this portion can be avoided. As a result, an optical recording medium having excellent optical corrosion resistance and characteristic can be obtained.

Having described preferred embodiments of the present invention with reference to the accompanying drawings, it is to be understood that the present invention is not limited to the above-mentioned embodiments and that various changes and modifications can be effected therein by one skilled in the art without departing from the spirit or scope of the present invention as defined in the appended claims.

**Claims**

1. An optical recording medium comprising a signal region constituted of information pits line and/or groove are formed on a main surface of a disc-shaped non-magnetic supporting substrate, and a recording layer and/or a reflection layer and a light transmission layer of 3 to 177 [μm] in thickness are formed in the signal region, so that information reproduction and/or recording are carried out by irradiating the side of the light transmission layer with blue-violet laser beam, **characterized in that** the recording layer or the reflection layer being formed in the entire signal region but not formed in region other than the signal region in an outermost peripheral portion and an innermost portion of the supporting substrate.

2. The optical recording medium according to claim 1 **characterized in that** the light transmission layer is formed of thermoplastic resin film.

3. The optical recording medium according to claim 1 **characterized in that** the light transmission layer is formed of thermoplastic resin film and adhesive agent layer.

4. The optical recording medium according to claim 1 **characterized in that** the light transmission layer is formed of thermoplastic resin film, and

   a signal region constituted of information pits line and/or groove are formed in the thermoplastic resin film on a side of bonding with supporting substrate and a recording layer and/or a reflection layer are formed in the signal region,
   the recording layer or the reflection layer on the side of bonding with the thermoplastic resin film being formed in the entire signal region of the thermoplastic resin film while not formed in region other than the signal region in an outermost peripheral portion and an innermost portion of the thermoplastic resin film.

5. The optical recording medium according to claim 1 **characterized in that**
   the supporting substrate has a protrusion which is formed around the center bore on the laser irradiated side of the supporting substrate and has a thickness greater than that of the surrounding portion.

# F I G. 1

## 10

# F I G. 2

# F I G. 3

F I G. 4

L L

21

20

F I G. 5

21a

20

F I G. 6

22

21a    20

## F I G. 7

23

22

21a

20

## F I G. 8

24

## F I G. 9

24

25

FIG. 10

FIG. 11

FIG. 12

F I G. 13

F I G. 14

# FIG. 15

Error Rate

Distance from The Center of Optical Recording Medium [mm]

Before Storage

After Storage

EP 1 152 406 A2

# F I G. 16

Distance from The Center of Optical Recording Medium [mm]

EP 1 152 406 A2

F I G. 17

1k    1k    3    4

1h    23    1

F I G. 18

3    2

1h    1

# FIG. 19

10

# FIG. 20

100